# EUROPÄISCHE PATENTSCHRIFT

(11) **EP 1 795 494 B1**
(45) Veröffentlichungstag und Bekanntmachung des Hinweises auf die Patenterteilung: **13.08.2008**
(21) Anmeldenummer: 06024011.6
(22) Anmeldetag: 20.11.2006
(51) Int. Cl.: B67D 5/01

(54) **Vorrichtung zum Füllen und Entleeren eines Behälters**
Device for filling and emptying a container
Dispositif pour remplir et vider un conteneur

(30) Priorität: 08.12.2005 DE 102005059068
(43) Veröffentlichungstag der Anmeldung: 13.06.2007
(73) Patentinhaber: Rogg, Werner, 78056 Villingen-Schwenningen (DE)
(72) Erfinder: Rogg, Werner, 78056 Villingen-Schwenningen (DE)
(74) Vertreter: Patentanwälte Westphal, Mussgnug & Partner

(56) Entgegenhaltungen:
- EP-A- 0 249 377
- WO-A-20/04089807
- US-A- 4 450 853
- US-A1- 2004 025 968

## Beschreibung

Die Erfindung betrifft eine Vorrichtung zum Füllen und Entleeren eines Behälters gemäß dem Oberbegriff des Patentanspruchs 1.

Bekannt sind Vorrichtungen zum Füllen und Entleeren eines Behälters, insbesondere mit und von Flüssigkeit, bestehend aus zwei Rohren, von denen ein Rohr für den Zulauf der Flüssigkeit und das andere Tankrohr für den Rücklauf der Flüssigkeit vorgesehen ist. Dabei sind die beiden Rohre parallel zueinander angeordnet. Derartige Vorrichtungen sind oft instabil, da sie nur über Schellen oder Klemmen miteinander verbunden sind, wobei insbesondere die oberen Enden der Rohre, welche aus dem Behälter ragen, verbogen werden können. Bei den Behältern kann es sich um beliebig ausgebildete Flüssigkeitsbehälter, beispielsweise auch um vollständige Systemanlagen, die mit Flüssigkeit gefüllt sind, handeln.

Die Aufgabe der Erfindung besteht daher darin, eine Vorrichtung zum Füllen und Entleeren eines Behälters bereitzustellen, welche eine größere Stabilität aufweist und eine vereinfachte Fertigung und Montage ermöglicht.

Die Aufgabe der Erfindung wird gelöst durch eine Vorrichtung zum Füllen und Entleeren eines Behälters mit den kennzeichnenden Merkmalen des Patentanspruchs 1.

Vorteilhafte Ausgestaltungen und Weiterbildungen der Erfindung sind in den Unteransprüchen angegeben.

Die erfindungsgemäße Vorrichtung ist dadurch ausgezeichnet, dass das eine Rohr einen größeren Durchmesser aufweist als das andere Rohr, wobei das Rohr mit dem kleineren Durchmesser in dem Rohr mit dem größeren Durchmesser angeordnet ist. Durch die Anordnung der Rohre ineinander wird die Stabilität der Vorrichtung deutlich erhöht. Insbesondere können sich die beiden Rohre nicht mehr gegeneinander verdrehen oder verbiegen. Erfindungsgemäß ist das Rohr mit dem größeren Durchmesser in einer Befestigungsvorrichtung befestigt. Die Befestigungsvorrichtung dient dazu, die Vorrichtung zum Füllen und Entleeren eines Behälters in der entsprechenden Behälteröffnung zu befestigen. Die Befestigungsvorrichtung ist dazu kegelstumpfförmig ausgebildet, wobei sie sich in Richtung auf das untere Ende der Rohre verjüngt. Dadurch kann die Vorrichtung in unterschiedlich dimensionierte Öffnungen eines Behälters eingesetzt werden, jeweils so weit, bis die Befestigungsvorrichtung sicher in der Öffnung gehalten ist. Außerdem weist die Befestigungsvorrichtung umlaufende Rillen auf, welche einen besonders guten und sicheren Sitz der Befestigungsvorrichtung in der Behälteröffnung gewährleisten.

Bei einer besonders vorteilhaften Ausgestaltung der Erfindung ist das Rohr mit dem kleineren Durchmesser koaxial in dem Rohr mit dem größeren Durchmesser angeordnet. Dies ermöglich eine gleichmäßigere Förderung, insbesondere der Flüssigkeit, innerhalb der beiden Rohre.

Vorzugsweise ist das Rohr mit dem kleineren Durchmesser länger als das Rohr mit dem größeren Durchmesser. Dies dient der besseren Trennung von Zulauf und Rücklauf, unabhängig davon, ob das Rohr mit dem kleineren Durchmesser oder das Rohr mit dem größeren Durchmesser als Zulauf oder als Rücklauf verwendet wird.

Bei einer vorteilhaften Weiterbildung der Erfindung ist die Befestigungsvorrichtung aus Aluminium gefertigt, um sich der Befestigungsöffnung besonders gut anpassen zu können. Damit die Befestigungsvorrichtung jedoch gegenüber dem Rohr gut abgedichtet ist, weist die Befestigungsvorrichtung einen Gummiring zur Abdichtung gegenüber dem Rohr auf.

Vorzugsweise sind die beiden Rohre in einem Verbindungsstück befestigt, welches an den oberen Enden der Rohre angeordnet ist. Das Verbindungsstück dient einerseits zum Anschluss eines externen Flüssigkeitsreservoirs und gegebenenfalls einer Pumpvorrichtung, wenn der Behälter entleert werden soll, an die Rohre, andererseits jedoch ebenfalls zur Stabilisierung der Vorrichtung, da beide Rohre fest in dem Verbindungsstück angeordnet sind.

Vorzugsweise weist das Verbindungsstück eine axial verlaufende erste Ausnehmung zur Aufnahme des Rohres mit dem größeren Durchmesser auf, in deren Bodenfläche eine zweite Ausnehmung zur Aufnahme des Rohres mit dem kleineren Durchmesser vorgesehen ist, wobei in der ersten Ausnehmung eine erste Anschlussöffnung für einen ersten Anschluss und in der zweiten Ausnehmung eine zweite Anschlussöffnung für einen zweiten Anschluss angeordnet sind. Die beiden Rohre können somit separat jeweils mit einem Anschluss verbunden werden und sind gleichzeitig relativ zueinander in dem Verbindungsstück fixiert, wodurch eine erhöhte Stabilität der Vorrichtung gewährleistet ist.

Bei einer vorteilhaften Weiterbildung der Erfindung ist das untere Ende des Rohres mit dem größeren Durchmesser an dem Rohr mit dem kleineren Durchmesser mittels eines Zentrierrings gehalten. Dieser Zentrierring gewährleistet, dass auch im Bereich der unteren Enden der Rohre die Rohre in einer relativen Position fest zueinander gehalten werden.

Vorzugsweise weist der Zentrierring eine durchgehende Öffnung für das Rohr mit dem kleineren Durchmesser und eine einseitig geschlossene Öffnung für das Rohr mit dem größeren Durchmesser auf, wodurch das Rohr mit dem größeren Durchmesser nach unten abgeschlossen wird, jedoch in einer sehr stabilen Position relativ zu dem Rohr mit dem kleineren Durchmesser gehalten ist. Damit auch durch das Rohr mit dem größeren Durchmesser Material, insbesondere Flüssigkeit zugeführt oder abgesaugt werden kann, weist das Rohr mit dem größeren Durchmesser im Bereich des unteren Endes in der Rohrwandung wenigstens eine, vorzugsweise mehrere über den Umfang verteilt angeordnete Durchgangsöffnungen auf.

Die erfindungsgemäße Vorrichtung kann vorteilhafterweise zum Füllen eines Behälters mit Flüssigkeit oder zum Entleeren eines Behälters von Flüssigkeit oder zum Austausch von Flüssigkeit in einem Behälter verwendet werden.

Ein Ausführungsbeispiel der Erfindung wird anhand der folgenden Figuren ausführlich erläutert. Es zeigt:
- Figur 1: einen Axialschnitt durch ein Ausführungsbeispiel der erfindungsgemäßen Vorrichtung,
- Figur 2a: eine Seitenansicht durch ein Ausführungsbeispiel einer Befestigungsvorrichtung,
- Figur 2b: einen Axialschnitt durch die Befestigungsvorrichtung gemäß Figur 2a,
- Figur 2c: eine perspektivische Ansicht der Befestigungsvorrichtung gemäß Figur 2a und
- Figur 3: einen Axialschnitt durch ein Ausführungsbeispiel eines Verbindungsstücks.

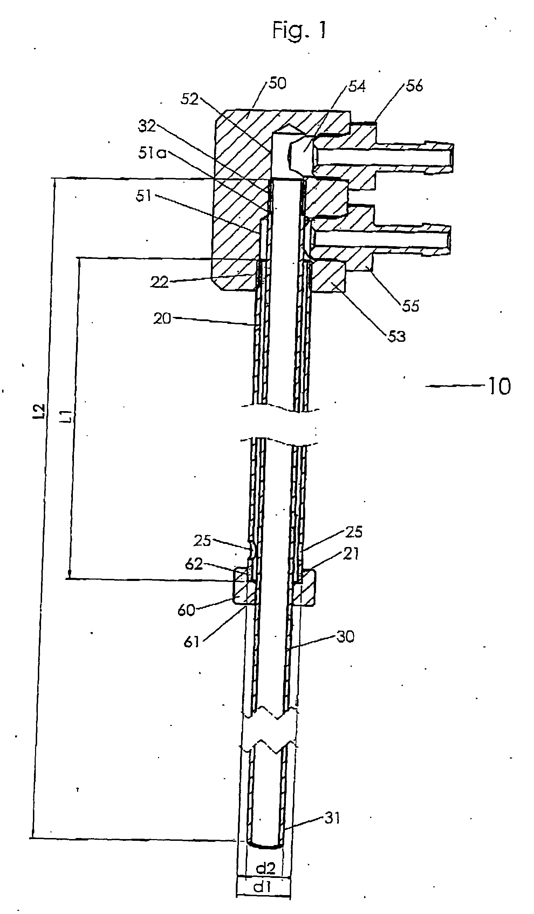

Figur 1 zeigt einen Axialschnitt durch ein Ausführungsbeispiel einer Vorrichtung 10 zum Füllen und Entleeren eines nicht dargestellten Behälters mit Flüssigkeit mit einem Rohr 20 mit größeren Durchmesser d1 und einem Rohr 30 mit kleinerem Durchmesser d2. Das Rohr 30 mit dem kleineren Durchmesser d2 ist koaxial in dem Rohr 20 mit dem größeren Durchmesser d1 angeordnet, so dass ihre Achsen übereinstimmen. Das Rohr 20 mit dem größeren Durchmesser d1 weist eine Länge 11 auf, welche kleiner ist als die Länge 12 des Rohres 30 mit dem kleineren Durchmesser d2. Die Rohre 20, 30 weisen jeweils ein unteres Ende 21, 31 und ein oberes Ende 22, 32 auf. Dabei sind die Rohre 20, 30 mit ihren oberen Enden 22, 32 in einem Verbindungsstück 50 befestigt.

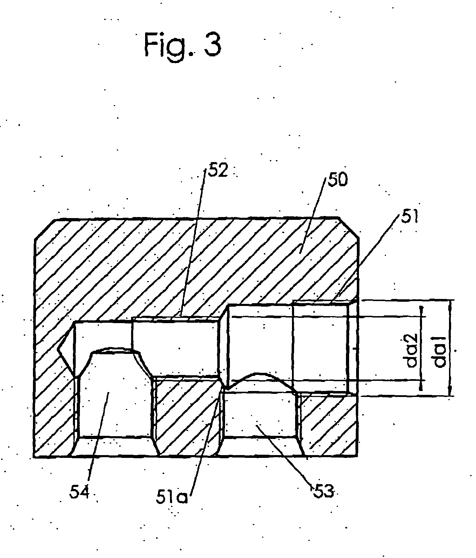

Das Verbindungsstück 50, welches in einem Querschnitt ohne die Rohre 20, 30 in Figur 3 dargestellt ist, weist dazu eine erste Ausnehmung 51 mit einem Durchmesser da1 auf, an deren Bodenfläche 51a eine zweite Ausnehmung 52 mit einem Durchmesser da2 angeordnet ist. Die Längsachsen der ersten Ausnehmung 51 und der zweiten Ausnehmung 52 stimmen dabei ebenfalls überein. Der Durchmesser da2 der zweiten Ausnehmung 52 ist dabei kleiner als der Durchmesser da1 der ersten Ausnehmung 51 und entspricht im wesentlichen dem Durchmesser d2 des Rohres 30 mit dem kleineren Durchmesser d2. Der Durchmesser da1 der ersten Ausnehmung 51 entspricht im wesentlichen dem Durchmesser d1 des Rohres 20 mit dem größeren Durchmesser d1. Somit kann das Rohr 20 mit dem größeren Durchmesser d1 in die erste Ausnehmung 51 eingesetzt werden, während das Rohr 30 mit dem kleineren Durchmesser d2 in die zweite Ausnehmung 52 eingesetzt werden kann. Vorzugsweise weisen dazu die erste Ausnehmung 51 und die zweite Ausnehmung 52 je ein Gewinde auf, so dass die Rohre 20, 30 in die Ausnehmungen 51, 52 eingedreht werden können und somit besonders stabil in dem Verbindungsstück 50 gehalten werden. Dabei wird das Rohr 20 jedoch nur etwa über die halbe Länge der ersten Ausnehmung 51 in die Ausnehmungen 51 eingesetzt, damit der Zugang zu der ersten Anschlussöffnung 53 nicht versperrt wird. Weiterhin wird auch das Rohr 30 nur etwa über die halbe Länge der zweiten Ausnehmung 52 in die Ausnehmung 52 eingesetzt, damit der Zugang zu der zweiten Anschlussöffnung 54 nicht versperrt wird.

Ausgehend von der ersten Ausnehmung 51 weist das Verbindungsstück 50 radial nach außen verlaufend eine erste Anschlussöffnung 53 zum Anschluss eines ersten Anschlusses 55 auf, während ausgehend von der zweiten Ausnehmung 52 radial nach außen verlaufend ein zweite Anschlussöffnung 54 zum Anschluss eines zweiten Anschlusses 56 angeordnet ist. Die beiden Anschlussöffnungen 53, 54 sind dabei axial in den Bereichen der Ausnehmungen 51, 52 angeordnet, in denen die oberen Enden 22, 32 der Rohre 20, 30 nicht angeordnet sind. Über die erste Ausnehmung 51 bzw. die zweite Ausnehmung 52 werden so die Rohre 20, 30 mit den Anschlüssen 55, 56 verbunden. Die Anschlüsse 55, 56 dienen zum Anschluss der Rohre entweder an einen Flüssigkeitstank oder an eine Saugpumpe.

Das Rohr 30 mit dem kleineren Durchmesser d2 weist eine größere Länge 12 auf als das Rohr 20 mit dem größeren Durchmesser d1. Somit ragt das untere Ende 31 des Rohres 30 über das untere Ende 21 des Rohres 20 hinaus. Das untere Ende 21 des Rohres 20 mit dem größeren Durchmesser d1 ist über einen Zentrierring 60 an dem Rohr 30 mit dem kleineren Durchmesser d2 fixiert. Dazu weist der Zentrierring 30 eine durchgehende Öffnung 61 auf, deren Innendurchmesser im wesentlichen dem Durchmesser d2 des Rohres 30 mit dem kleineren Durchmesser d2 entspricht, und koaxial zu dieser durchgehenden Öffnung 61 eine einseitig geschlossene Öffnung 62, deren Innendurchmesser im wesentlichen dem Durchmesser d1 des Rohres 20 mit dem größeren Durchmesser d1 entspricht. Der Zentrierring 30 kann somit auf das Rohr 30 mit dem kleineren Durchmesser d2 gesetzt und auf diesem entlanggeschoben werden derart, dass das untere Ende 21 des Rohres 20 mit dem größeren Durchmesser d1 in der einseitig geschlossenen Öffnung 62 zu liegen kommt, wodurch das Rohr 20 nach unten abgeschlossen wird. Dadurch wird das Rohr 30 in relativer Lage, insbesondere koaxial, fest zu dem Rohr 20 fixiert. Um jedoch einen Durchfluss von Flüssigkeit oder sonstigem Material oder Luft durch das Rohr 30 gewährleisten zu können, weist das Rohr 30 im Bereich seines unteren Endes 32 radiale Durchgangsöffnungen 25 in seiner Rohrwandung auf. Um eine gleichmäßige Förderung von Material, insbesondere eine gleichmäßige Flüssigkeitsströmung durch das Rohr 30 gewährleisten zu können, werden zwei Durchgangsöffnungen 25 diametral gegenüber im Bereich des unteren Endes 32 des Rohres 30 angeordnet.

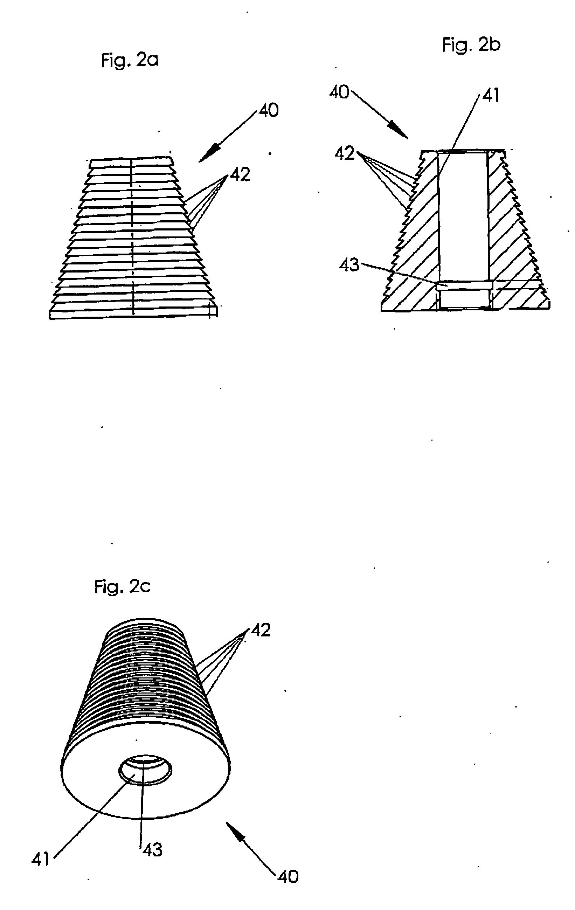

Um die Vorrichtung 10 in einer nicht dargestellten Öffnung des Behälters, welcher mit Flüssigkeit gefüllt oder entsprechend entleert werden soll, fixieren zu können, weist die Vorrichtung 10 eine Befestigungsvorrichtung 40 auf, welche in den Figuren 2a bis 2c dargestellt ist und bei der Montage vor Anbringung des Zentrierrings 60 über das Rohr 20 mit dem größeren Durchmesser d1 geschoben wird. Dazu weist die Befestigungsvorrichtung 40 eine Durchgangsöffnung 41 mit einem Durchmesser db auf, welcher in etwa dem Durchmesser d1 des Rohres 20 mit dem größeren Durchmesser d1 entspricht. Somit wird die Befestigungsvorrichtung 40 sicher an dem Rohr 20 gehalten und bildet insbesondere eine Abdichtung zwischen dem Rohr 20 und der Behälteröffnung. Dazu ist die Befestigungsvorrichtung 40 insbesondere aus Aluminium gefertigt, so dass sich die Befestigungsvorrichtung 40 besonders gut und sicher in die Behälteröffnung einfügt. Zur Abdichtung der Durchgangsöffnung 41 der Befestigungsvorrichtung 40 gegenüber dem in der Durchgangsöffnung 41 angeordneten Rohr 20 ist in der Durchgangsöffnung 41 umlaufend ein Gummiring 43 angeordnet. Die Befestigungsvorrichtung 40 ist im wesentlichen kegelstumpfartig ausgeformt, wobei sie derart auf das Rohr 20 mit dem größeren Durchmesser d1 aufgesetzt wird, dass sie sich zu den unteren Enden 21, 31 der Rohre 20, 30 hin verjüngt. Dadurch ist gewährleistet, dass die Befestigungsvorrichtung 40 in Behälteröffnungen unterschiedlichen Durchmessers stets sicher eingesetzt werden kann und eine gute Abdichtung zwischen der Vorrichtung 10 und der Behälteröffnung bildet. Vorzugsweise weist dazu die Außenfläche der Befestigungsvorrichtung 40 umlaufende Rillen 42 auf, die sich in der Behälteröffnung verankern und diese umgreifen, so dass eine bessere Abdichtung gewährleistet wird.

Im Folgenden soll schließlich das Funktionsprinzip der Vorrichtung 10 zum Füllen und Entleeren eines Behälters beschrieben werden.

Sowohl das Rohr 20 mit größerem Durchmesser d1 als auch das Rohr 30 mit dem kleineren Durchmesser d2 können sowohl zum Füllen als auch zum Entleeren eines Behälters verwendet werden. Soll ein Behälter mittels der Vorrichtung 10 entleert werden, wird an einen der beiden Anschlüsse 55, 56 eine Pumpe angeschlossen, während der andere Anschluss 55, 56 offen verbleibt, um ein Nachströmen von Luft in den zu entleerenden Behälter zu gewährleisten. Die Pumpe saugt dann über den Anschluss 55, 56 durch das Rohr 30 mit dem kleineren Durchmesser d2 oder das Rohr 20 mit dem größeren Durchmesser d1 entlang des Rohres 30 mit dem kleineren Durchmesser d2 die Flüssigkeit aus dem Behälter in die erste bzw. zweite Ausnehmung 51, 52 und über die entsprechende Anschlussöffnung 53, 54 und den Anschluss 55, 56 in einen nicht dargestellten anderen Behälter. Dabei strömt über das jeweils andere Rohr 20, 30 Luft in den zu entleerenden Behälter nach. Soll der Behälter vollständig geleert werden, wird die Pumpe vorzugsweise an den zweiten Anschluss 56, welcher mit dem Rohr 30 mit dem kleineren Durchmesser d2 und der größeren Länge 12 verbunden ist, angeschlossen. Befindet sich jedoch Schmutz am Boden des Behälters, welcher nicht angesaugt werden soll, wird vorzugsweise die Pumpe an den ersten Anschluss 55 angeschlossen, so dass bei Einbringen des längeren Rohres 30 bis auf die Bodenfläche des Behälters der Behälter bis zu einem Pegelstand geleert werden kann, der der Höhe der Durchgangsöffnungen 25 des Rohres 20 mit dem größeren Durchmesser d1 über dem Behälterboden entspricht.

Bei einer nicht dargestellten Ausführungsform der Erfindung kann zur Vermeidung von Ansaugung von Schmutz am unteren Ende 31 des Rohres 30 auch ein Sieb angebracht werden.

Soll der Behälter gefüllt werden, wird entweder an den ersten Anschluss 55 oder den zweiten Anschluss 56 ein externes Flüssigkeitsreservoir zur Flüssigkeitszufuhr angeschlossen und die Flüssigkeit über das entsprechende Rohr 20, 30 in den Behälter eingefüllt. Durch das andere Rohr 20, 30 kann entsprechend Luft aus dem Behälter entweichen. Wird über den ersten Anschluss 55 und das Rohr 20 mit größerem Durchmesser d1 Flüssigkeit in einen Behälter gepumpt, muss jedoch darauf geachtet werden, dass das untere Ende 31 des Rohres 30 mit dem kleineren Durchmesser d2 nicht in die Flüssigkeit eintaucht, da ansonsten keine Luft mehr aus dem Behälter entweichen kann.

Schließlich kann die Vorrichtung 10 auch zum Austausch von Flüssigkeit in einem Behälter oder einer Systemanlage verwendet werden, indem die im Behälter vorhandene Flüssigkeit abgesaugt und gleichzeitig durch neue Flüssigkeit ersetzt wird. Um einen vollständigen Austausch der Flüssigkeit zu gewährleisten, wird über das Rohr 30 mit dem kleineren Durchmesser d2, welches jedoch die größere Länge 12 aufweist, die in dem Behälter oder einer beliebig ausgebildeten Systemanlage vorhandene Flüssigkeit abgesaugt, indem in der Zuleitung zu der zweiten Anschlussöffnung 54 ein Unterdruck erzeugt wird. Gleichzeitig ist an die erste Anschlussöffnung 53 ein externes Flüssigkeitsreservoir angeschlossen, so dass über das Rohr 20 mit dem größeren Durchmesser d1 über die Zuleitung zu der ersten Anschlussöffnung 53 neue Flüssigkeit in den Behälter oder die Systemanlage nachströmt, so dass die alte Flüssigkeit mit neuer Flüssigkeit ersetzt wird.

### Bezugszeichenliste

- 10: vorrichtung
- 20: Rohr
- 21: unteres Ende
- 22: oberes Ende
- 25: Durchgangsöffnung
- 30: Rohr
- 31: unteres Ende
- 32: oberes Ende
- 40: Befestigungsvorrichtung
- 41: Durchgangsöffnung
- 42: Rillen
- 43: Gummiring
- 50: Verbindungsstück
- 51: erste Ausnehmung
- 51a: Bodenfläche
- 52: zweite Ausnehmung
- 53: erste Anschlussöffnung
- 54: zweite Anschlussöffnung
- 55: erster Anschluss
- 56: zweiter Anschluss
- 60: Zentrierring
- 61: durchgehende Öffnung
- 62: einseitig geschlossene Öffnung

- d1: Durchmesser
- d2: Durchmesser
- db: Durchmesser
- 11: Länge
- 12: Länge
- da1: Durchmesser
- da2: Durchmesser

## Patentansprüche

1. Vorrichtung (10) zum Füllen und Entleeren eines Behälters, insbesondere mit und von Flüssigkeit, mit einem Rohr für den Zulauf und einem Rohr für den Rücklauf, wobei ein Rohr (20) einen größeren Durchmesser (d1) aufweist als das andere Rohr (30) mit einem kleineren Durchmesser (d2) und das Rohr (30) mit dem kleineren Durchmesser (d2) in dem Rohr (20) mit dem größeren Durchmesser d1) angeordnet ist,
wobei die Vorrichtung (10) eine Befestigungsvorrichtung (40), die kegelstumpfförmig ausgebildet ist, wobei sie sich in Richtung auf das untere Ende (21, 31) der Rohre (20, 30) verjüng umfasst, und dass das Rohr (20) mit dem größeren Durchmesser (d1) in dem Befestigungsvorrichtung (40) befestigt ist,
**dadurch gekennzeichnet, dass** die Befestigungsvorrichtung (40) umlaufende Rillen (42) aufweist.

2. Vorrichtung nach Anspruch 1,
**dadurch gekennzeichnet, dass** das Rohr (30) mit dem kleineren Durchmesser (d2) koaxial in dem Rohr (20) mit dem größeren Durchmesser (d1) angeordnet ist.

3. Vorrichtung nach einem der vorhergehenden Ansprüche,
**dadurch gekennzeichnet, dass** das Rohr (30) mit dem kleineren Durchmesser (d1) länger ist als das Rohr (20) mit dem größeren Durchmesser (d1).

4. Vorrichtung nach einem der Ansprüche 1 bis 3,
**dadurch gekennzeichnet, dass** die Befestigungsvorrichtung (40) aus Aluminium gefertigt ist.

5. Vorrichtung nach Anspruch 4,
**dadurch gekennzeichnet, dass** die Befestigungsvorrichtung (40) einen Gummiring (43) zur Abdichtung gegen das Rohr (20) mit dem größeren Durchmesser (d1) aufweist.

6. Vorrichtung nach einem der vorhergehenden Ansprüche,
**dadurch gekennzeichnet, dass** die beiden Rohre (20, 30) in einem Verbindungsstück (50) befestigt sind, welches an den oberen Enden (22, 32) der Rohre (20, 30) angeordnet ist.

7. Vorrichtung nach Anspruch 6,
**dadurch gekennzeichnet, dass** das Verbindungsstück (50) eine axial verlaufende erste Ausnehmung (51) zur Aufnahme des Rohrs (20) mit dem größeren Durchmesser (d1) aufweist, in deren Bodenfläche (51a) eine zweite Ausnehmung (52) zur Aufnahme des Rohrs (30) mit dem kleineren Durchmesser (d2) vorgesehen ist, und wobei in der ersten Ausnehmung (51) eine erste Anschlussöffnung (53) zum Anschluss eines ersten Anschlusses (55) und in der zweiten Ausnehmung (52) eine zweite Anschlussöffnung (54) zum Anschluss eines zweiten Anschlusses (56) angeordnet sind.

8. Vorrichtung nach einem der vorhergehenden Ansprüche,
**dadurch gekennzeichnet, dass** das untere Ende (21) des Rohres (20) mit dem größeren Durchmesser (d1) an dem Rohr (30) mit dem kleineren Durchmesser (d2) durch einen Zentrierring (60) gehalten ist.

9. Vorrichtung nach Anspruch 8,
**dadurch gekennzeichnet, dass** der Zentrierring (60) eine durchgehende Öffnung (61) für das Rohr (30) mit dem kleineren Durchmesser (d2) und eine einseitig geschlossene Öffnung (62) für das Rohr (20) mit dem größeren Durchmesser (d1) aufweist, und dass das Rohr (20) mit dem größeren Durchmesser (d1) im Bereich des unteren Endes (21) in der Rohrwandung wenigstens eine, vorzugsweise mehrere über den Umfang verteilt angeordnete, Durchgangsöffnungen (25) aufweist.

10. Verwendung einer Vorrichtung nach einem der Ansprüche 1 bis 9 zum Füllen eines Behälters mit Flüssigkeit oder zum Entleeren eines Behälters von Flüssigkeit oder zum Austausch von Flüssigkeit in einem Behälter.

## Claims

1. Device (10) for filling and emptying a container, particularly with/of liquid, with a pipe for the inflow and a pipe for the return flow,
wherein one pipe (20) has a greater diameter (d1) than the other pipe (30) with a smaller diameter (d2), and the pipe (30) with the smaller diameter (d2) is arranged in the pipe (20) with the larger diameter (d1),
wherein the device (10) comprises a fixing device (40) which is designed in the shape of a truncated cone and which tapers in the direction towards the lower end (21, 31) of the pipes (20, 30), and the pipe (20) with the larger diameter (d1) is fixed in the fixing device (40),
**characterised in that** the fixing device (40) has grooves (42) running all round.

2. Device according to claim 1,
**characterised in that** the pipe (30) with the smaller diameter (d2) is arranged coaxially in the pipe (20) with the larger diameter (d1).

3. Device according to one of the preceding claims,
**characterised in that** the pipe (30) with the smaller diameter (d1) is longer than the pipe (20) with the larger diameter (d1).

4. Device according to one of the claims 1 to 3,
**characterised in that** the fixing device (40) manufactured out of aluminium.

5. Device according to claim 4,
**characterised in that** the fixing device (40) has a rubber ring (43) for sealing against the pipe (20) with the larger diameter (d1).

6. Device according to one of the preceding claims,
**characterised in that** the two pipes (20, 30) are fixed in a connection piece (50) that is arranged at the upper ends (22, 32) of the pipes (20, 30).

7. Device according to claim 6,
**characterised in that** the connection piece (50) has a first recess (51) which runs axially, to receive the pipe (20) with the larger diameter (d1), and in whose base area (51a) a second recess (52) is provided to receive the pipe (30) with the smaller diameter (d2), and wherein arranged in the first recess (51) is a first connection opening (53) for connecting a first connection (55), and arranged in the second recess (52) is a second connection opening (54) for connecting a second connection (56).

8. Device according to one of the preceding claims,
**characterised in that** the lower end (21) of the pipe (20) with the larger diameter (d1) is held on the pipe (30) with the smaller diameter (d2) by means of a centring ring (60).

9. Device according to claim 8,
**characterised in that** the centring ring (60) has a continuous opening (61) for the pipe (30) with the smaller diameter (d2) and an opening (62) closed on one side for the pipe (20) with the larger diameter (d1), and that in the area of the lower end (21), the pipe (20) with the larger diameter (d1) has, in the pipe wall, at least one passage opening (25), preferably several distributed around the circumference.

10. Use of a device according to one of the claims 1 to 9, for filling a container with liquid or for emptying a container of liquid, or for exchanging liquid in a container.

## Revendications

1. Dispositif (10) pour remplir et vider un récipient notamment de liquide comportant un tube pour l'arrivée et un tube pour le retour, un tube (20) ayant un plus grand diamètre (d1) que le petit diamètre (d2) de l'autre tube (30) et le tube (30) de petit diamètre (d2) est placé dans le tube (20) de plus grand diamètre (d1),
le dispositif (10) comportant un dispositif de fixation (40) de forme tronconique, et ce dispositif va en diminuant en direction de l'extrémité inférieure (21, 31) des tubes (20, 30), et le tube (20) de grand diamètre (d1) est fixé dans le dispositif de fixation (40),
**caractérisé en ce que**
le dispositif de fixation (40) comporte des gorges périphériques (42).

2. Dispositif selon la revendication 1,
**caractérisé en ce que**
le tube (30) de petit diamètre (d2) est installé coaxialement dans le tube (20) de grand diamètre (d1).

3. Dispositif selon les revendications précédentes,
**caractérisé en ce que**
le tube (30) de petit diamètre (d2) est plus long que le tube (20) de grand diamètre (d1).

4. Dispositif selon les revendications 1 à 3,
**caractérisé en ce que**
le dispositif de fixation (40) est en aluminium.

5. Dispositif selon la revendication 4,
**caractérisé en ce que**
le dispositif de fixation (40) comporte une bague en caoutchouc (43) pour assurer l'étanchéité vis-à-vis du tube (20) de grand diamètre (d1).

6. Dispositif selon les revendications précédentes,
**caractérisé en ce que**
les tubes (20,30) sont fixés dans une pièce de liaison (50) prévue à l'extrémité supérieure (22, 32) des tubes (20, 30).

7. Dispositif selon la revendication 6,
**caractérisé en ce que**
la pièce de liaison (50) a une première cavité (51) axiale pour recevoir le tube (20) de grand diamètre (d1) et sa surface de fond (51a) comporte une seconde cavité (52) pour recevoir le tube (30) de petit diamètre (d2), et
la première cavité (51) comporte un premier orifice de branchement (53) pour recevoir un premier branchement (55) et la seconde cavité (52) comporte un second orifice de branchement (54) pour recevoir un second branchement (56).

8. Dispositif selon les revendications précédentes,
**caractérisé en ce que**
l'extrémité inférieure (21) du tube (20) de grand diamètre (d1) est tenue au tube (30) de petit diamètre (d2) par une bague de centrage (60).

9. Dispositif selon la revendication 8,
**caractérisé en ce que**
la bague de centrage (60) a une ouverture continue (61) pour le tube (30) de petit diamètre (d2) et une ouverture (62) fermée d'un côté pour le tube (20) de grand diamètre (d1), et
le tube (20) de grand diamètre (d1) comporte dans la région de l'extrémité inférieure (21), dans la paroi du tube, au moins un et de préférence plusieurs orifices de passage (25) répartis à la périphérie.

10. Application d'un dispositif selon les revendications 1 à 9 pour remplir un récipient avec du liquide ou pour vider un récipient de son liquide ou pour échanger le liquide dans un récipient.
